# EUROPEAN PATENT SPECIFICATION

(11) **EP 3 330 773 B1**
(45) Date of publication and mention of the grant of the patent: **24.06.2020**
(21) Application number: 17203681.6
(22) Date of filing: 27.11.2017
(51) Int. Cl.: G02B 27/01, G06F 3/01, G06F 3/0481, H04N 9/31, G02B 27/00

(54) **DISPLAY APPARATUS AND METHOD OF DISPLAYING USING CONTEXT DISPLAY AND PROJECTORS**
ANZEIGEVORRICHTUNG UND VERFAHREN ZUM ANZEIGEN MITTELS KONTEXTANZEIGE UND PROJEKTOREN
AFFICHEUR ET PROCÉDÉ D'AFFICHAGE À L'AIDE DU CONTEXTE ET PROJECTEURS

(30) Priority: 01.12.2016 US 201615366424; 01.12.2016 US 201615366497; 08.12.2016 US 201615372973
(43) Date of publication of application: 06.06.2018
(73) Proprietor: Varjo Technologies Oy, 00100 Helsinki (FI)
(72) Inventor: Sahlsten, Oiva, 24280 Salo (FI); Konttori, Urho, 00260 Helsinki (FI); Melakari, Klaus, 90140 Oulu (FI)
(74) Representative: Suominen, Kaisa Liisa

(56) References cited:
- EP-A2- 0 618 471
- JP-A- H11 109 278
- US-A- 4 479 784
- US-A- 5 394 203
- US-A- 5 956 180
- US-A1- 2005 185 281
- US-A1- 2013 050 833
- US-A1- 2013 170 031
- US-A1- 2014 307 430
- Martin Weigel ET AL: "From Focus to Context and Back: Combining Mobile Projectors and Stationary Displays", , 23 April 2013 (2013-04-23), XP055467134, Retrieved from the Internet: URL:https://epo.summon.serialssolutions.co m/2.0.0/link/0/eLvHCXMwY2BQASWbRGMjC92kxER gByUlEVgOmqdYArkmJuaWqUbJJomgcchIZ5MQd_Mgd xMfJgbYlXVoxwuADgvTN7E0MjdlZmA2Bi3Kg53PWol UC7gJMrBBmqtCDEypeSIMwW5F-bkKbvnJpcUKJfkK4 HOeKkoUgOYqOCUmZ1sBRXKTwPcvKPjmJwFzn0IAZNg jv6gYrCoYMg0OtEbBJbO4ICexsliUwcLNNcTZQxfmg PgUYJZPTo0 [retrieved on 2018-04-13]
- HSU C W ET AL: "Transparent displays enabled by resonant nanoparticle scattering", 2014 CONFERENCE ON LASERS AND ELECTRO-OPTICS (CLEO) - LASER SCIENCE TO PHOTONIC APPLICATIONS, THE OPTICAL SOCIETY, 8 June 2014 (2014-06-08), pages 1-2, XP032707588, [retrieved on 2014-12-16]
- Oliver Bimber ET AL: "Near-Eye Displays" In: "Displays : Fundamentals and Applications", 5 July 2011 (2011-07-05), CRC Press, XP055572703, ISBN: 978-1-56881-439-1 pages 439-504,

## Description

### TECHNICAL FIELD

The present disclosure relates generally to representation of visual information; and more specifically, to display apparatuses comprising context displays, and focus image projectors. Furthermore, the present disclosure also relates to methods of displaying, via the aforementioned display apparatuses.

### BACKGROUND

In recent times, there has been a rapid increase in use of modern technologies such as virtual reality, augmented reality, and so forth, in day to day lives of people. For example, such technologies may be used for applications such as gaming, education, military training, healthcare surgery training, and so forth. Specifically, such technologies present a simulated environment (often known as 'virtual world') to a user of a device. The simulated environment is presented by rendering images constituting the simulated environment on displays within the device. Examples of such devices include, but are not limited to, head mounted virtual reality devices, virtual reality glasses, and augmented reality headset. Such devices are adapted to present to the user, a feeling of immersion in the simulated environment using contemporary techniques such as stereoscopy.

However, such existing devices have certain limitations. In an example, conventional displays used in such devices are of small size. Specifically, pixel densities offered by such displays are insufficient to imitate visual acuity of eyes of humans. Further, displays offering higher pixel densities are dimensionally too large to be accommodated in such devices. In another example, displays used in existing devices require a large number of optical components to properly render the simulated environment along with implementation of gaze contingency as in the human visual system. Specifically, size and number of such optical components are difficult to accommodate in such devices. Consequently, such existing devices are not sufficiently well developed and are limited in their ability to mimic the human visual system.

EP 618471 A2 discloses a display apparatus, which detects the visual axis of an observer and accordingly adjusts the position of a high resolution image within a low resolution image displayed to the observer. The detection of the visual axis is done by sending invisible infrared light to the eye of the observer, which is reflected and measured with a sensor. A half mirror, which combines the low and high resolution image is inclined or tilted in two directions to follow the visual axis of the eye, to display the high resolution image always in coincidence with the visual axis direction.

US 4479784 A discloses an image generation system for a flight simulation system for trainees, whereby a foveal view is projected onto a screen by a projection system. Another peripheral view is projected on the same screen with a lower resolution.

US 2005/185281 A1 discloses a display apparatus, which detects a fixation point of a viewer's eyes on an image of a screen. A high resolution image (fovea display) is created by a LCD and projected onto that portion of the screen, where the fixation point lies. This is accomplished by illuminating the LCD from one of different possible positions, i.e. different light sources LEDs.

Martin Weigel ET AL: "From Focus to Context and Back: Combining Mobile Projectors and Stationary Displays", (In: 4th annual digital media conference (GRAND '13)), discloses a "focus plus context display", wherein a mobile projector is used to form a high-resolution image on a low-resolution context display.

JP H11 109278 A discloses a head-mounted display wherein a focus projector forms a high-resolution image on the screen of a context display. The focus projector may be tilted and/or rotated to adjust the position of the rendered focus image on the screen.

US 5956180 discloses an optical viewing system comprising a first electronic display device for displaying a background image and a second electronic display device a foreground image. The second display device comprises a screen which is transparent and permits light generated by the first electronic display device to pass, thereby combining the background image and the foreground image to generate a three dimensional image.

Therefore, in light of the foregoing discussion, there exists a need to overcome the aforementioned drawbacks associated with conventional displays used in devices for implementing simulated environments.

### SUMMARY

The present disclosure seeks to provide a display apparatus. The present disclosure also seeks to provide a method of displaying, via a display apparatus comprising at least one context display, and at least one focus image projector, the at least one context display comprising at least one projection surface. The present disclosure seeks to provide a solution to the existing problem of pixel density and physical size tradeoffs, and image discontinuities within conventional displays used in devices for implementing simulated environments. An aim of the present disclosure is to provide a solution that overcomes at least partially the problems encountered in prior art, and provides a display apparatus that closely mimics the human visual system.

In one aspect, an embodiment of the present disclosure provides a display apparatus according to claim 1.

In another aspect, an embodiment of the present disclosure provides a method according to claim 11.

Embodiments of the present disclosure substantially eliminate or at least partially address the aforementioned problems in the prior art, and enables implementation of active foveation within a display apparatus used in devices for implementing simulated environments, to mimic the human visual system.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIGs.1-2 are block diagrams of exemplary architectures of a display apparatus, in accordance with an embodiment of the present disclosure;
FIG.3 is an exemplary implementation of the display apparatus, in accordance with an embodiment of the present disclosure;
FIG.4 is an exploded view of an exemplary context display, in accordance with an embodiment of the present disclosure;
FIGs.5-6 are schematic illustrations of a layer of an exemplary context display, in accordance with an embodiment of the present disclosure; and
FIG.7 illustrates steps of a method of displaying via a display apparatus, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides a display apparatus according to claim 1.

An arrangement is thus made to combine the projection of the rendered focus image with the projection of the rendered context image to create a visual scene.

In another aspect, an embodiment of the present disclosure provides a method according to claim 11.

The present disclosure provides a display apparatus and a method of displaying via the display apparatus using context displays and projectors. The display apparatus described herein is not limited in operation by size and number of optical components to render the simulated environment. Therefore, the display apparatus may be easily implemented in small-sized devices such as virtual reality devices. Further, the display apparatus simulates active foveation of the human visual system by detecting gaze direction of the eyes of the user of the device. Furthermore, the displayed images using the described display apparatus are continuous due to proper minimisation of transitional area seams between the rendered context image and the rendered focus image. Therefore, the described display apparatus is operable to closely imitate gaze contingency similar to the human visual system. The method of displaying using the described display apparatus is easy to implement, and possesses robust active foveation capability. In the method described herein, the context and the focus images are rendered at almost an equal distance from the eyes of the user, thereby, reducing strain on the eyes. Further, the display apparatus is inexpensive due presence of few optical components, and easy to manufacture.

The display apparatus comprises at least one context display for rendering a context image, the at least one context display comprising at least one projection surface, and at least one focus image projector for rendering a focus image. An angular width of a projection of the rendered context image ranges from 40 degrees to 220 degrees. An angular width of a projection of the rendered focus image ranges from 5 degrees to 60 degrees. Further, in the display apparatus, an arrangement is made to combine the projection of the rendered focus image with the projection of the rendered context image to create a visual scene.

Optionally, the angular width of the projection of the rendered context image may be greater than 220 degrees. In such instance, angular dimensions of the context display for rendering the context image may be larger than 220 degrees. According to an embodiment, the angular width of a projection of the rendered context image may be for example from 40, 50, 60, 70, 80, 90, 100, 110, 120, 130, 140, 150, 160 or 170 degrees up to 70, 80, 90, 100, 110, 120, 130, 140, 150, 160, 170, 180, 190, 200, 210 or 220 degrees. According to another embodiment the angular width of a projection of the rendered focus image may be for example from 5, 10, 15, 20, 25, 30, 35, 40, 45 or 50 degrees up to 15, 20, 25, 30, 35, 40, 45, 50, 55 or 60 degrees.

In an embodiment, the visual scene may be a scene such as a coffee shop environment, haunted house, a forest scene, and so forth, within a simulated environment to be presented to a user of a device, such as a head-mounted virtual reality device, virtual reality glasses, augmented reality headset, and so forth. More specifically, the visual scene may be projected onto eyes of the user when the device is used by the user. In such instance, the device may comprise the display apparatus. Further, the aforementioned arrangement of the at least one context display comprising the at least one projection surface, and the at least one focus image projector facilitates proper combination of the projections of the rendered context and focus images. If such combination is less than optimal (or improper), the visual scene created may appear distorted.

In an embodiment, the context image relates to an image of the visual scene, to be rendered and displayed via the display apparatus within the aforementioned angular width, to cope with saccades associated with movement of the eyes of the user. In another embodiment, the focus image relates to an image, to be rendered and projected via the display apparatus, within the aforementioned angular width to cope with saccadic movements associated with the eyes of the user. Specifically, the focus image is dimensionally smaller than the context image. Further, the context and focus images collectively constitute the visual scene upon combination of projections thereof.

In an embodiment, the term 'context display' used herein relates to a display (or screen) adapted to facilitate rendering of the context image thereon. Specifically, the at least one context display may be used for provisioning a context area for rendering the context image. According to an embodiment, the context display may be selected from the group consisting of: a Liquid Crystal Display (LCD), a Light Emitting Diode (LED)-based display, an Organic LED (OLED)-based display, a micro OLED-based display, and a Liquid Crystal on Silicon (LCoS)-based display. In another embodiment, the at least one context display may comprise at least two context displays, at least one of the at least two context displays being arranged to be used for a left eye of the user, and at least one of the at least two context displays being arranged to be used for a right eye of the user. Specifically, the at least two context displays may be used such that at least one context display may be dedicatedly used to render a separate context image for each eye of the user. More specifically, the separate context images for the left eye and the right eye of the user may collectively constitute the context image.

In yet another embodiment, the at least one context display may be used for both eyes of the user on a shared basis. Specifically, in such embodiment, the at least one context display may be used to render separate context images for both the left eye, and the right eye of the user, on a shared basis.

As described previously, the at least one context display comprises the at least one projection surface. In an embodiment, the term 'projection surface' used herein relates to a display (or screen) adapted to facilitate rendering of the focus image thereon. Specifically, the at least one projection surface may have transmittance and reflectance specifications suitable for receiving a projection of the focus image to render the focus image thereon. In another embodiment, the focus image may be projected onto the at least one projection surface from either or both of, a front side of the projection surface, and a back side of the at least one projection surface.

In an example, the at least one projection surface may comprise at least two projection surfaces, at least one of the at least two projection surfaces being arranged to be used for the left eye of the user, and at least one of the at least two projection surfaces being arranged to be used for the right eye of the user. Specifically, the at least two projection surfaces may be used such that at least one projection surface may be dedicatedly used to render a separate focus image for each eye of the user. More specifically, the separate focus images for the left eye and the right eye of the user may collectively constitute the focus image.

In yet another embodiment, the at least one projection surface may be used for both eyes of the user on a shared basis. Specifically, in such embodiment, the at least one projection surface may be used to render separate focus images for both the left eye, and the right eye of the user, on a shared basis.

According to an embodiment, the term 'focus image projector' used herein relates to an optical device for projecting the focus image at the at least one projection surface. According to an embodiment, the focus image projector may be selected from the group consisting of: a Liquid Crystal Display (LCD)-based projector, a Light Emitting Diode (LED)-based projector, an Organic LED (OLED)-based projector, a Liquid Crystal on Silicon (LCoS)-based projector, a Digital Light Processing (DLP)-based projector, and a laser projector.

In an embodiment of the present disclosure, the at least one focus image projector may comprise at least two focus image projectors, at least one of the at least two focus image projectors being arranged to be used for a left eye of a user, and at least one of the at least two focus image projectors being arranged to be used for a right eye of the user. Specifically, the at least two focus image projectors may be used such that at least one focus image projector may be dedicatedly (or wholly) used to render the focus image for one eye of the user. The at least two focus image projectors allow separate optimization of optical paths of the separate focus images (for example, a focus image for the left eye of the user and a focus image for the right eye of the user) collectively constituting the focus image.

For example, if the at least one focus image projector is a laser projector, one focus image projector may be arranged to be used for both eyes of the user. Specifically, the one laser projector may be operated such that the separate focus images for the both eyes of the user may be projected substantially simultaneously. For example, the one laser projector may be used as the at least one focus image projector to project separate focus images (for both the left eye of the user and the right eye of the user) due to fast speed of operation thereof.

The display apparatus further comprises an image steering unit, means for detecting a gaze direction, and a processor coupled in communication with the image steering unit and the means for detecting the gaze direction.

In an embodiment, the processor may be hardware, software, firmware or a combination of these, configured to controlling operation of the display apparatus. Specifically, the processor may control operation of the display apparatus to process and display (or project) the visual scene onto the eyes of the user. In an instance wherein the display apparatus is used within the device associated with the user, the processor may or may not be external to the device.

Optionally, the processor may also be coupled in communication with a memory unit. In an embodiment, the memory unit may be hardware, software, firmware or a combination of these, suitable for storing an image of the visual scene and/or the context and focus images to be processed by the processor for displayed via the display apparatus. In such embodiment, the memory unit may be used within the device or may be remotely located.

In an embodiment, the means for detecting a gaze direction may relate to specialized equipment for measuring a direction of gaze of the eyes of the user and detecting movement of the eyes, such as eye trackers. Specifically, an accurate detection of the gaze direction may allow the display apparatus to closely implement gaze contingency thereon. Further, the means for detecting the gaze direction may/may not be placed in contact with the eyes. Examples of the means for detecting a gaze direction include contact lenses with motion sensors, cameras monitoring position of pupil of the eye, and so forth.

The processor is configured to receive an input image, and use the detected gaze direction to determine a region of visual accuracy of the input image. According to an embodiment, the term 'input image' used herein relates to the image of the visual scene to be displayed via the display apparatus. Specifically, the input image may be displayed to the eyes of the user. In an embodiment, the input image may be received from an image sensor coupled to the device associated with the user. Specifically, the image sensor (such as image sensor of a pass-through digital camera) may capture an image of a real-world environment as the input image to be projected onto the eyes. In another embodiment, the input image may be received from the memory unit coupled in communication with the processor. Specifically, the memory unit may be configured to store the input image in a suitable format including, but not limited to, Motion Picture Experts Group (MPEG), Joint Photographic Experts Group (JPEG), Tagged Image File Format (TIFF), Portable Network Graphics (PNG), Graphics Interchange Format (GIF), and Bitmap file format (BMP). In such embodiment, the input image may optionally be a computer generated image.

Along with receiving the input image, the processor uses the detected gaze direction to determine the region of visual accuracy of the input image. In an embodiment, the region of visual accuracy relates to a region of the input image whereat the detected gaze direction of the eyes of the user may be focused. Specifically, the region of visual accuracy may be a region of interest (or a fixation point) within the input image, and may be projected onto fovea of both the eyes of the user. Further, the region of visual accuracy may be the region of focus within the input image. Therefore, it may be evident that the region of visual accuracy relates to a region resolved to a much greater detail as compared to other regions of the input image, when the input image is viewed by a human visual system.

Further, after determining the region of visual accuracy of the input image, the processor is configured to process the input image to generate the context image and the focus image, the context image having a first resolution and the focus image having a second resolution. The second resolution is higher than the first resolution. The focus image substantially corresponds to the region of visual accuracy of the input image. Further, the context image corresponds to a low-resolution representation of the input image. Therefore, the context image includes the region of visual accuracy of the input image along with remaining region of the input image. Specifically, size of the context image is larger than size of the focus image since the focus image corresponds to only a portion of the context image whereat the detected gaze direction of the eye may be focused.

In an embodiment, the first and second resolutions may be understood in terms of angular resolution. Specifically, pixels per degree indicative of the second resolution is higher than pixels per degree indicative of the first resolution. In an example, fovea of the eye of the user corresponds to 2 degrees of visual field and receives the projection of the focus image of angular cross section width equal to 114 pixels indicative of 57 pixels per degree. Therefore, an angular pixel size corresponding to the focus image would equal 2/114 or 0.017. Further in such example, the retina of the eye corresponds to 180 degrees of visual field and receives projection of the context image of angular cross section width equal to 2700 pixels indicative of 15 pixels per degree. Therefore, an angular pixel size corresponding to the context image would equal 180/2700 or 0.067. As calculated, the angular pixel size corresponding to the context image is clearly much larger than the angular pixel size corresponding to the focus image. However, a perceived angular resolution indicated by a total number of pixels may be greater for the context image as compared to the focus image since the focus image corresponds to only a part of the context image, wherein the part corresponds to the region of visual accuracy of the input image.

Along with the generation of the context image and the focus image, a region of the context image that substantially corresponds to the region of visual accuracy of the input image is masked. Specifically, the masking may be performed by the processor to hide (or obscure) the region of the context image corresponding to the region of visual accuracy of the input image. More specifically, masking the region of the context image that substantially corresponds to the region of visual accuracy of the input image relates to modifying content (specifically, the context image) rendered on the at least one context display such that luminance and/or chrominance characteristics of the at least one projection surface remains unaltered. For example, pixels of the context image corresponding to the region of visual accuracy of the input image may be dimmed (or blackened) for masking. Further, the focus image substantially corresponds to the region of visual accuracy of the input image, while the second resolution is higher than the first resolution.

Further, the processor is configured to render the context image at the at least one context display, and render the focus image at the at least one projection surface via the at least one focus image projector.

Furthermore, the processor is configured to control the image steering unit to adjust a location of the projection of the rendered focus image on the at least one projection surface, such that the projection of the rendered focus image substantially overlaps the projection of the masked region of the rendered context image. The processor is configured to perform rendering of the context and focus images, and controlling the image steering unit substantially simultaneously. Specifically, the overlapping projection of the focus image on the projection of the rendered context image may collectively constitute a projection of the input image. The context and focus images are rendered substantially simultaneously in order to avoid time lag during overlap (or superimposition) of projections thereof.

As described previously, the angular width of the projection of the rendered context image is larger than the angular width of the projection of the rendered focus image. This may be attributed to the fact that the rendered focus image is typically projected on and around the fovea of the eye, whereas the rendered context image is projected on a retina of the eye, of which the fovea is just a small part. Specifically, a combination of the rendered context and focus images constitute the input image and may be projected onto the eye to project the input image thereon.

In an embodiment, the term 'image steering unit' used herein relates to equipment (such as optical elements, electromechanical components, and so forth) for controlling the location of the projection of the rendered focus image on the at least one projection surface. Specifically, the image steering unit may include at least one element/component. Optionally, the image steering unit may also be operable to control the projection of the context image rendered at the at least one context display.

In the aforementioned embodiment, the image steering unit substantially overlaps the projection of the rendered focus image with the projection of the masked region of the rendered context image to avoid distortion of the region of visual accuracy of the input image. Specifically, the region of visual accuracy of the input image is represented within both, the rendered context image of low resolution and the rendered focus image of high resolution. The overlap (or superimposition) of projections of low and high-resolution images of a same region results in distortion of appearance of the same region. Further, the rendered focus image of high resolution may contain more information pertaining to the region of visual accuracy of the input image, as compared to the rendered context image of low resolution. Therefore, the region of the context image that substantially corresponds to the region of visual accuracy of the input image is masked, in order to project the rendered high-resolution focus image without distortion.

As described in an embodiment previously, the processor is configured to mask the region of the context image corresponding to the region of visual accuracy of the input image. Specifically, the masking may be performed such that transitional area seams (or edges) between the region of visual accuracy of the displayed input image and remaining region of the displayed input image are minimum. It is to be understood that the region of visual accuracy of the displayed input image corresponds to the projection of the focus image (and the masked region of the context image) whereas the remaining region of the displayed input image corresponds to the projection of the context image. Specifically, the masking should be performed as a gradual gradation in order to minimize the transitional area seams upon overlapping (or superimposition) of the projections of context and focus images so that the displayed input image appears continuous. For example, the processor may significantly dim pixels of the context image corresponding to the region of visual accuracy of the input image, and gradually reduce the amount of dimming of the pixels with increase in distance thereof from the region of visual accuracy of the input image. If alignment and appearance of the superimposed (or overlapping) projections of the rendered context and focus images are improper and/or have discontinuities, then the displayed input image would also be improper.

Optionally, masking the region of the context image that substantially corresponds to the region of visual accuracy of the input image may be performed using linear transparency mask blend of inverse values between the context image and the focus image at the transition area, stealth (or camouflage) patterns containing shapes naturally difficult for detection by the eyes of the user, and so forth.

According to an embodiment, the at least one context display may comprise a multi-layered structure, and wherein the at least one projection surface is implemented by way of at least one layer of the multi-layered structure. Specifically, the at least one layer used for implementing the at least one projection surface may be mechanically bonded and/or electrically coupled to other layers of the multi-layered structure of the at least one context display. More specifically, the at least one layer used for implementing the at least one projection surface may have specific transmittance and reflectance specifications to facilitate rendering of the focus image thereon. Such specific transmittance and reflectance specifications may depend on a side (such as the front side and/or the back side) of projection of the focus image as described herein below. In an example, the at least one projection surface may be a non-transparent (or opaque) surface. In another example, the at least one projection surface may be a semi-transparent su rface.

In an embodiment, the focus image may be projected onto the at least one layer of the at least one projection surface from the front side thereof. In such instance, the at least one layer for implementing the at least one projection surface may be arranged to reflect the projection of the focus image substantially. In another embodiment, the focus image may be projected onto the at least one layer of the at least one projection surface from the back side thereof. In such instance, the at least one layer for implementing the at least one projection surface may be arranged to allow the projection of the focus image to pass through substantially. In yet another embodiment, the focus image may be projected onto the at least one layer of the at least one projection surface from both the front and the back sides thereof. In such instance, the at least one layer for implementing the at least one projection surface may be arranged to partially reflect the projection of the focus image and to partially allow the projection of the focus image to pass therethrough.

Optionally, the multi-layered structure of the at least one context display may comprise layers such as, but not limited to, colour filters, encapsulation glass, backplanes built on substrates (such as glass, polyimide, and so forth), protection films, and top and/or bottom polarizers. Specifically, characteristics (or properties) of such layers may be adjustable and may facilitate better projection of the focus image on the at least one projection surface of the at least one context display. According to an embodiment, the at least one projection surface may be arranged to allow the projection of the rendered context image to pass through substantially. According to another embodiment, the at least one projection surface may be arranged to reflect the projection of the rendered context image substantially.

In an embodiment, the at least one projection surface may be implemented by way of an optical coating on a front side of the at least one context display or on a back side of the at least one context display. Specifically, the optical coating may be utilized to achieve the specific transmittance and reflectance specifications suitable for rendering the focus image thereon. More specifically, such specific transmittance and reflectance specifications of the optical coating may depend on the side of the at least one context display whereat the optical coating is implemented. In an example, the optical coating may reflect the projection of the focus image substantially when implemented on the front side of the at least one context display. In another example, the optical coating may allow the projection of the focus image to pass through substantially when implemented on the back side of the at least one context display.

In another embodiment, the at least one projection surface may be implemented by way of a polarizer or a retarder. Specifically, inherent properties of optical devices such as the polarizer or the retarder may facilitate use thereof for rendering the focus image on the at least one projection surface. For example, the at least one projection surface may be implemented by way of an absorptive linear polarizer. In such example, the absorptive linear polarizer may have an inherent property of substantially reflecting the projection of the rendered focus image, when direction of polarization of the projection of the focus image from the at least one focus image projector, corresponds to direction of polarization of the absorptive linear polarizer. Further, in such example, the absorptive linear polarizer may have another inherent property of absorbing projection of the rendered focus image, when direction of polarization of the projection of the focus image from the at least one focus image projector, does not correspond to direction of polarization of the absorptive linear polarizer.

The at least one context display comprises a layer having a pixel layout that allows the projection of the rendered focus image to pass through substantially. Specifically, the pixel layout may be a grid-like arrangement of pixels of the at least one context display. The pixel layout comprises a plurality of pixels that are arranged in a manner that semi-transparent regions are formed between neighboring pixels. Specifically, the plurality of pixels are sparsely dispersed within the grid-like arrangement and may have significant separation between the neighboring pixels. The separation between the neighboring pixels constitutes the semi-transparent regions therebetween. Therefore, the layer of the at least one context display having the aforementioned pixel layout has low pixel resolution (or low pixel density). Further, the aforementioned layer allows the projection of the rendered focus image to substantially pass therethrough. Specifically, the processor processes the focus image such that the projection of the high resolution focus image is projected through the layer, when projected onto a back side of the layer.

More specifically, the high resolution back-projected focus image may be displayed on top of the pixel layout using optical elements such as microlenses, microprisms, and so forth.

In one embodiment, the at least one context display comprises at least one layer having optical waveguides for allowing the projection of the rendered focus image to pass through substantially. Specifically, the optical waveguide may be semi-transparent, thereby allowing the projection of the focus image to pass therethrough. Optionally, the at least one layer having optical waveguides may be positioned on an optical path between the at least one projection surface and the at least one focus image projector. In an embodiment, the optical waveguide may further comprise optical elements therein such as microprisms, microlenses, mirrors, diffractive optics, and so forth.

The image steering unit comprises at least one first actuator for moving the focus image projector with respect to the at least one projection surface, wherein the processor is configured to control the at least one first actuator to adjust the location of the projection of the rendered focus image on the at least one projection surface. Specifically, the at least one first actuator may move the at least one focus image projector when the gaze direction of the eye shifts from one direction to another. In such instance, the arrangement of the at least one focus image projector and the at least one projection surface may not optimally project the rendered focus image on and around the fovea of the eye. Therefore, the processor may control the at least one first actuator to move the at least one focus image projector with respect to the at least one projection surface, to adjust the location of the projection of the rendered focus image on the at least one projection surface such that the rendered focus image may be projected on and around the fovea of the eye even on occurrence of shift in the gaze direction. More specifically, the processor may control the at least one first actuator by generating an actuation signal (such as an electric current, hydraulic pressure, and so forth).

In an example, the at least one first actuator may move the at least one focus image projector closer or away from the at least one projection surface. In another example, the at least one first actuator may move the at least one focus image projector laterally with respect to the at least one projection surface. In yet another example, the at least one first actuator may tilt and/or rotate the at least one focus image projector with respect to the at least one projection surface.

According to an embodiment, the image steering unit may comprise at least one optical element that is positioned on an optical path between the at least one projection surface and the at least one focus image projector, and at least one second actuator for moving the at least one optical element with respect to the at least one focus image projector. The at least one optical element may be selected from the group consisting of a lens, a prism, a mirror, and a beam splitter. Further, in such embodiment, the processor is configured to control the at least one second actuator to adjust the location of the projection of the rendered focus image on the at least one projection surface. Specifically, the at least one optical element may change the optical path of the projection of the rendered focus image on the at least one projection surface in order to facilitate projection of the rendered focus image on and around the fovea of the eye even on occurrence of shift in the gaze direction. More specifically, the processor may control the at least one second actuator by generating an actuation signal (such as an electric current, hydraulic pressure, and so forth).

For example, a prism may be positioned on an optical path between a projection surface and a focus image projector. Specifically, an optical path of a projection of a rendered focus image may change on passing through the prism to adjust a location of the projection of the rendered focus image on the projection surface. Further, the prism may be moved transversally and/or laterally, be rotated, be tilted, and so forth, by a second actuator in order to facilitate projection of the rendered focus image on and around fovea of the eye even on occurrence of shift in the gaze direction of the user.

In an embodiment, an electronically controlled optical assembly, such as one or more LC lenses positioned on the optical path between the at least one projection surface and the at least one focus image projector, may be used to adjust the location of the projection of the rendered focus image on the at least one projection surface.

According to another embodiment, the image steering unit may comprise at least one third actuator for moving the at least one projection surface, wherein the processor is configured to control the at least one third actuator to adjust the location of the projection of the rendered focus image on the at least one projection surface. Specifically, the at least one third actuator may move the at least one projection surface in order to facilitate projection of the rendered focus image on and around the fovea of the eye even on occurrence of shift in the gaze direction. More specifically, the processor may control the at least one third actuator by generating an actuation signal (such as an electric current, hydraulic pressure, and so forth).

In an example, the at least one third actuator may move the at least one projection surface closer or away from the at least one focus image projector. In another example, the at least one third actuator may move the at least one projection surface laterally with respect to the at least one focus image projector. In yet another example, the at least one third actuator may tilt and/or rotate the at least one projection surface.

In an embodiment, the display apparatus may comprise at least one focusing lens that is positioned on an optical path between the at least one projection surface and the at least one focus image projector and at least one fourth actuator for moving the at least one focusing lens with respect to the at least one focus image projector. In such embodiment, the processor is configured to control the at least one fourth actuator to adjust a focus of the projection of the rendered focus image. Specifically, the at least one focusing lens may utilize specialized properties thereof to adjust the focus of the projection of the rendered focus image by changing the optical path thereof. More specifically, the focus of the projection of the rendered focus image may be adjusted to accommodate for diopter tuning, astigmatism correction, and so forth. Further, the processor may control the at least one fourth actuator by generating an actuation signal (such as an electric current, hydraulic pressure, and so forth).

In an embodiment, the at least one focusing lens may comprise a Liquid Crystal lens (LC lens) or other electronically controlled optical element.

In an embodiment, the processor may implement image processing functions for the at least one projection surface. Specifically, the image processing functions may be implemented prior to rendering the context image at the at least one context display and rendering the focus image at the at least one projection surface. More specifically, implementation of such image processing functions may optimize quality of the rendered context and focus images. Therefore, the image processing function may be selected by taking into account properties of the at least one projection surface, the at least one context display, and the properties of the input image.

According to an embodiment, image processing functions for the at least one projection surface may comprise at least one function for optimizing perceived context image and/or the focus image quality, the at least one function selected from the group comprising low pass filtering, colour processing, and gamma correction. In an embodiment, the image processing functions for the at least one projection surface may further comprise edge processing to minimize perceived distortion on a boundary of combined projections of the rendered context and focus images.

Optionally, the aforementioned display apparatus may be used to receive another input image, process the another input image to generate another focus and context images, and render the another focus and context images whilst arranging for the projection of the rendered another focus and context images to be combined to create the visual scene. In an example, the another input image may be received from a video camera of a head-mounted virtual reality device associated with the user.

The present description also relates to the method as described above. The various embodiments and variants disclosed above apply mutatis mutandis to the method. More specifically, the location of the projection of the rendered focus image can be adjusted by controlling at least one first actuator of the image steering unit to move the focus image projector with respect to the at least one projection surface. The location of the projection of the rendered focus image can also be adjusted by controlling at least one second actuator of the image steering unit to move at least one optical element of the image steering unit with respect to the at least one focus image projector, wherein the at least one optical element is positioned on an optical path between the at least one projection surface and the at least one focus image projector.

According to another embodiment, the location of the projection of the rendered focus image is adjusted by controlling at least one third actuator of the image steering unit to move the at least one projection surface. The method may also further comprise adjusting a focus of the projection of the rendered focus image by controlling at least one fourth actuator of the display apparatus to move at least one focusing lens of the display apparatus with respect to the at least one focus image projector, wherein the at least one focusing lens is positioned on an optical path between the at least one projection surface and the at least one focus image projector.

### DETAILED DESCRIPTION OF THE DRAWINGS

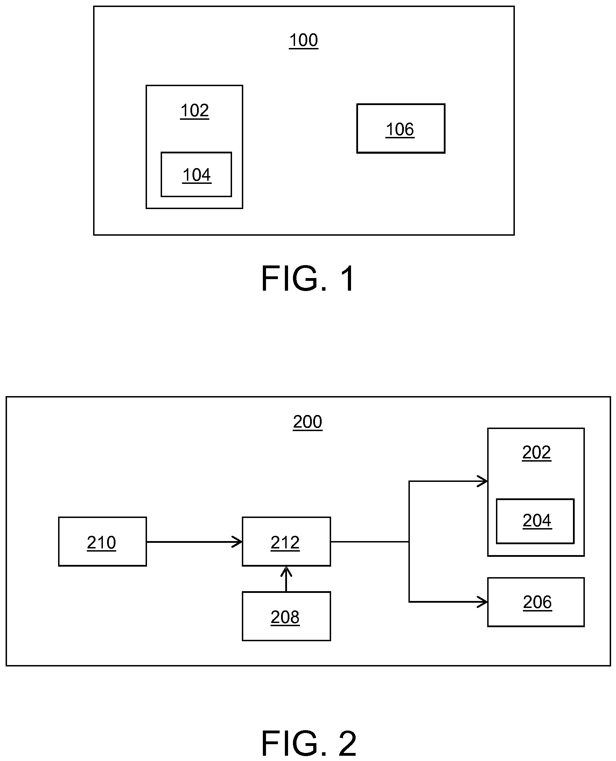

Referring to FIG.1, illustrated is a block diagram of an exemplary architecture of a display apparatus **100,** in accordance with an embodiment of the present disclosure. The display apparatus **100** includes at least one context display **102** for rendering a context image, the at least one context display **102** including at least one projection surface **104,** and at least one focus image projector **106** for rendering a focus image. An arrangement is made to combine the projection of the rendered focus image with the projection of the rendered context image to create a visual scene.

Referring to FIG.2, illustrated is a block diagram of an exemplary architecture of a display apparatus **200,** in accordance with another embodiment of the present disclosure. The display apparatus **200** includes at least one context display **202** for rendering a context image, the at least one context display **202** including at least one projection surface **204,** at least one focus image projector **206** for rendering a focus image, an image steering unit **208,** means for detecting a gaze direction **210,** and a processor **212.** The processor **212** is coupled in communication with the image steering unit **208** and the means for detecting the gaze direction **210.** Further, the processor **212** is also coupled to the at least one context display **202,** and the at least one focus image projector **206.**

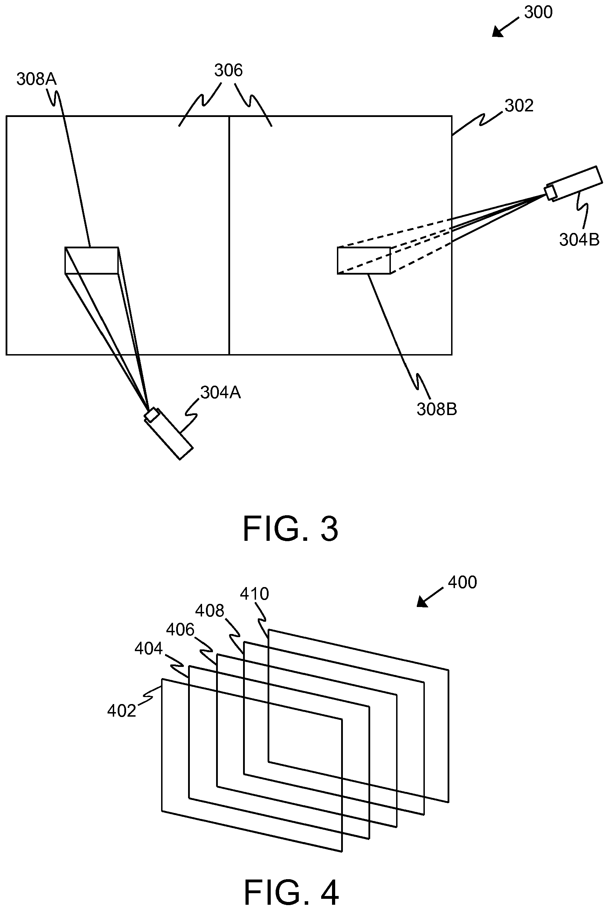

Referring to FIG.3, illustrated is an exemplary implementation of a display apparatus **300,** in accordance with an embodiment of the present disclosure. As shown, the display apparatus **300** includes at least one context display (depicted as a context display **302**), the at least one context display including at least one projection surface (not shown), at least one focus image projector comprising at least two focus image projectors (depicted as two focus image projectors **304A** and **304B**), means for detecting a gaze direction (not shown), a processor (not shown), and an image steering unit (not shown). The context display **302** depicted herein is used for both eyes of a user on a shared-basis. The processor of the display apparatus **300** is configured to render a context image **306** at the context display **302.** Specifically, the context image **306** may be collectively constituted by separate context images for both eyes of the user. Further, the processor of the display apparatus **300** is configured to render a focus image (depicted as two focus images **308A** and **308B**) at the at least one projection surface (not shown) via the two focus image projectors **304A** and **304B** respectively. In such instance, the focus image **308A** is used for the left eye of the user, and the focus image **308B** is used for the right eye of the user. As shown, the focus image **308A** is projected from a front side of the at least one projection surface and the focus image **308B** is projected from a back side of the at least one projection surface included in the context display **302.**

Referring to FIG.4, illustrated is an exploded view of an exemplary context display **400,** in accordance with an embodiment of the present disclosure. As shown, the context display **400** comprises a multi-layered structure (depicted as layers **402, 404, 406, 408,** and **410).** Further, the layer **402** is arranged at a front side of the context display **400** and the layer **410** is arranged at a back side of the context display **400.** The context display **400** includes at least one projection surface, such that the at least one projection surface is implemented by way of at least one layer (depicted as the layers **402** and **404)** of the multi-layered structure. Specifically, the at least one projection surface is implemented by way of an optical coating on the layer **402,** on the front side of the context display **400.** Further, the at least one projection surface is implemented by way of a polarizer represented by the layer **404.** The layer **406** represents a colour filter or an encapsulation glass. The layer **408** represents a backplane built on a substrate such as glass, polyimide, and so forth. Further, the layer **410** represents any of a bottom polarizer, a top polarizer, or a protection film. Optionally, the layer **402** may represent an optically clear hard coating which may be scratch resistant, thereby, protecting the context display **400.** In such instance, the at least one projection surface is implemented only by layer **404** of the depicted exemplary context display **400.**

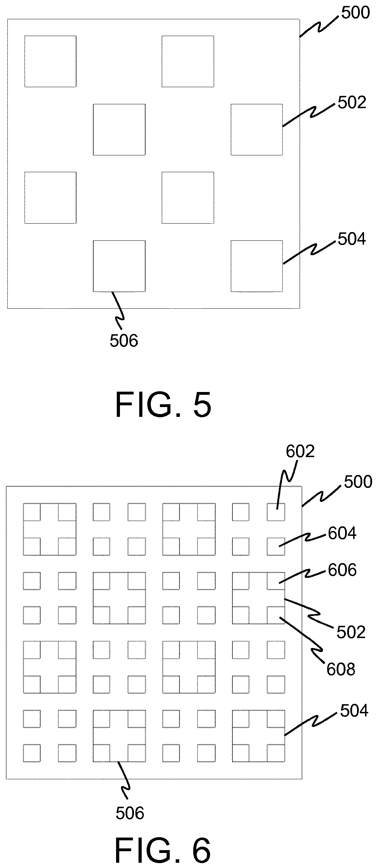

Referring to FIG.5, illustrated is a schematic illustration of a layer **500** of an exemplary context display (such as the exemplary context display **400** of FIG.4), in accordance with an embodiment of the present disclosure. As shown, the layer **500** has a pixel layout including a plurality of pixels depicted as **502, 504,** and **506.** Specifically, the pixel layout is a grid-like arrangement of the plurality of pixels **502, 504,** and **506.** Further, the plurality of pixels **502, 504,** and **506** are arranged in a manner that semi-transparent regions are formed between neighboring pixels. Therefore, the layer **500** of the exemplary context display having the depicted pixel layout has low pixel resolution (or low pixel density). Referring to FIG.6, illustrated is a schematic illustration of the layer **500** of the context display of FIG.5, in accordance with an embodiment of the present disclosure. As shown, the layer **500** allows a projection of a rendered focus image to pass through substantially. Specifically, the focus image may be projected from a back and/or a front side of the layer **500.** More specifically, the projection of the rendered focus image includes a plurality of pixels depicted as **602, 604, 606,** and **608,** such that the plurality of pixels have higher resolution (or higher pixel density) as compared to the plurality of pixels **502, 504,** and **506** of the layer **500.** Specifically, the plurality of pixels **602, 604, 606,** and **608** are seen on top of the plurality of pixels **502, 504,** and **506.** In an example, the pixels **606** and **608** are seen on top of the pixel **502.**

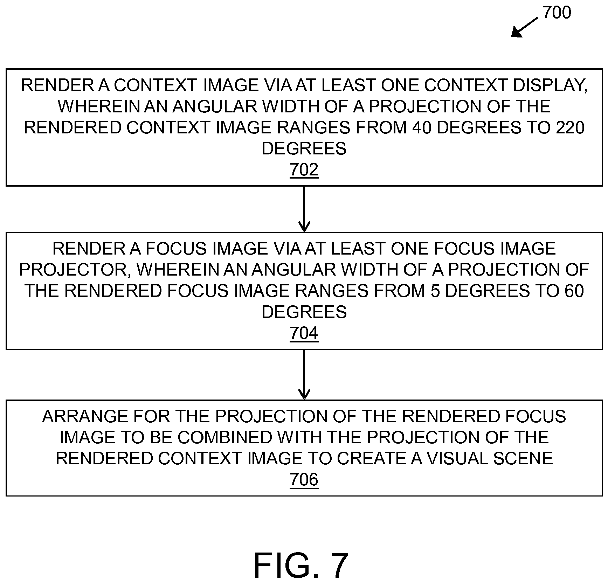

Referring to FIG.7, illustrated are steps of a method **700** of displaying via a display apparatus (such as the display apparatus **100** of FIG.1), in accordance with an embodiment of the present disclosure. At step **702,** a context image is rendered via at least one context display, wherein an angular width of a projection of the rendered context image ranges from 40 degrees to 220 degrees. At step **704,** a focus image is rendered via at least one focus image projector, wherein an angular width of a projection of the rendered focus image ranges from 5 degrees to 60 degrees. At step **706,** an arrangement is made for the projection of the rendered focus image to be combined with the projection of the rendered context image to create a visual scene.

The steps **702** to **706** are only illustrative and other alternatives can also be provided where one or more steps are added, one or more steps are removed, or one or more steps are provided in a different sequence without departing from the scope of the claims herein. In an example, the method **700** may further comprise detecting a gaze direction, and using the detected gaze direction to determine a region of visual accuracy of an input image, processing the input image to generate the context image and the focus image, the context image having a first resolution and the focus image having a second resolution, the second resolution being higher than the first resolution., and controlling the image steering unit to adjust a location of the projection of the rendered focus image on the at least one projection surface, such that the projection of the rendered focus image substantially overlaps the projection of the masked region of the rendered context image. The processing comprises masking a region of the context image that substantially corresponds to the region of visual accuracy of the input image and generating the focus image to substantially correspond to the region of visual accuracy of the input image. Further, rendering the focus and context images, and controlling the image steering unit are performed substantially simultaneously. Optionally, in the method **700,** the location of the projection of the rendered focus image may be adjusted by controlling at least one first actuator of the image steering unit to move the focus image projector with respect to the at least one projection surface. More optionally, in the method **700,** the location of the projection of the rendered focus image may be adjusted by controlling at least one second actuator of the image steering unit to move at least one optical element of the image steering unit with respect to the at least one focus image projector, wherein the at least one optical element is positioned on an optical path between the at least one projection surface and the at least one focus image projector. In an example, in the method **700,** the location of the projection of the rendered focus image may be adjusted by controlling at least one third actuator of the image steering unit to move the at least one projection surface. In another example, the method **700** may further comprise adjusting a focus of the projection of the rendered focus image by controlling at least one fourth actuator of the display apparatus to move at least one focusing lens of the display apparatus with respect to the at least one focus image projector, wherein the at least one focusing lens is positioned on an optical path between the at least one projection surface and the at least one focus image projector.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A display apparatus (100, 200, 300) comprising:
- at least one context display (102, 202, 302) for rendering a context image (306), wherein an angular width of a projection of the rendered context image ranges from 40 degrees to 220 degrees, the at least one context display comprising at least one projection surface;
- at least one focus image projector (106, 206, 304A, 304B) for rendering a focus image (308A, 308B), wherein an angular width of a projection of the rendered focus image ranges from 5 degrees to 60 degrees;
- an image steering unit (208) comprising at least one first actuator for moving the focus image projector with respect to the at least one projection surface (104, 204);
- means for detecting a gaze direction (210); and
- a processor (212) coupled in communication with the image steering unit and the means for detecting the gaze direction, wherein the processor is configured to:
(a) receive an input image, and use the detected gaze direction to determine a region of visual accuracy of the input image;
(b) process the input image to generate the context image and the focus image, the context image having a first resolution and the focus image having a second resolution, wherein:
- a region of the context image that substantially corresponds to the region of visual accuracy of the input image is masked,
- the focus image substantially corresponds to the region of visual accuracy of the input image, and
- the second resolution is higher than the first resolution;
(c) render the context image at the at least one context display;
(d) render the focus image at the at least one projection surface via the at least one focus image projector; and
(e) control the image steering unit to adjust a location of the projection of the rendered focus image on the at least one projection surface, such that the projection of the rendered focus image substantially overlaps the projection of the masked region of the rendered context image and control the at least one first actuator to adjust the location of the projection of the rendered focus image on the at least one projection surface,
wherein the at least one context display comprises a layer having a low pixel resolution, thus having a pixel layout that allows the projection of the rendered focus image to pass through substantially, and the separation between neighboring pixels in the pixel layout constitutes semi-transparent regions therebetween, and the projection surface of the rendered focus image is on a back side of said layer, and
wherein the processor is configured to perform (c), (d) and (e) substantially simultaneously.

2. The display apparatus (100, 200, 300) of claim 1, wherein the at least one context display (102, 202, 302) comprises a multi-layered structure, and wherein the at least one projection surface (104, 204) is implemented by way of at least one layer of the multi-layered structure.

3. The display apparatus (100, 200, 300) of claim 1 or 2, wherein the at least one projection surface (104, 204) is implemented by way of an optical coating on a front side of the at least one context display (102, 202, 302) or on a back side of the at least one context display.

4. The display apparatus (100, 200, 300) of claim 1, 2 or 3, wherein the at least one projection surface (104, 204) is implemented by way of a polarizer or a retarder.

5. The display apparatus (100, 200, 300) of any of the preceding claims, wherein the at least one context display (102, 202, 302) comprises at least one layer having optical waveguides for allowing the projection of the rendered focus image (308A, 308B) to pass through substantially.

6. The display apparatus (100, 200, 300) of any of the preceding claims, wherein the image steering unit (208) comprises:
- at least one optical element that is positioned on an optical path between the at least one projection surface (104, 204) and the at least one focus image projector (106, 206, 304A, 304B), the at least one optical element being selected from the group consisting of a lens, a prism, a mirror, and a beam splitter; and
- at least one second actuator for moving the at least one optical element with respect to the at least one focus image projector,
wherein the processor (212) is configured to control the at least one second actuator to adjust the location of the projection of the rendered focus image (308A, 308B) on the at least one projection surface.

7. The display apparatus (100, 200, 300) of any of the preceding claims, wherein the image steering unit (208) comprises at least one third actuator for moving the at least one projection surface (104, 204), wherein the processor (212) is configured to control the at least one third actuator to adjust the location of the projection of the rendered focus image (308A, 308B) on the at least one projection surface.

8. The display apparatus (100, 200, 300) of any of the preceding claims, wherein the display apparatus comprises:
- at least one focusing lens that is positioned on an optical path between the at least one projection surface (104, 204) and the at least one focus image projector (106, 206, 304A, 304B); and
- at least one fourth actuator for moving the at least one focusing lens with respect to the at least one focus image projector,
wherein the processor (212) is configured to control the at least one fourth actuator to adjust a focus of the projection of the rendered focus image (308A, 308B).

9. The display apparatus (100, 200, 300) of any of the preceding claims, wherein the context display (102, 202, 302) is selected from the group consisting of: a Liquid Crystal Display, a Light Emitting Diode-based display, an Organic Light Emitting Diode-based display, a micro Organic Light Emitting Diode-based display, and a Liquid Crystal on Silicon-based display.

10. The display apparatus (100, 200, 300) of any of the preceding claims, wherein the focus image projector (106, 206, 304A, 304B) is selected from the group consisting of: a Liquid Crystal Display-based projector, a Light Emitting Diode-based projector, an Organic Light Emitting Diode-based projector, a Liquid Crystal on Silicon-based projector, a Digital Light Processing-based projector, and a laser projector.

11. A method of displaying, via a display apparatus (100, 200, 300) comprising at least one context display (102, 202, 302), at least one focus image projector (106, 206, 304A, 304B), an image steering unit (208) comprising at least one first actuator for moving the focus image projector with respect to the at least one projection surface (104, 204), means for detecting a gaze direction (210), and a processor (212) coupled in communication with the image steering unit and the means for detecting the gaze direction, the at least one context display comprising at least one projection surface, the method comprising:
(i) rendering a context image (306) via the at least one context display, wherein an angular width of a projection of the rendered context image ranges from 40 degrees to 220 degrees;
(ii) rendering a focus image (308A, 308B) via the at least one focus image projector, wherein an angular width of a projection of the rendered focus image ranges from 5 degrees to 60 degrees;
(iii) arranging for the projection of the rendered focus image to be combined with the projection of the rendered context image to create a visual scene;
(iv) detecting a gaze direction, and using the detected gaze direction to determine a region of visual accuracy of an input image;
(v) processing the input image to generate the context image and the focus image, the context image having a first resolution and the focus image having a second resolution, the second resolution being higher than the first resolution, wherein the processing comprises:
- masking a region of the context image that substantially corresponds to the region of visual accuracy of the input image; and
- generating the focus image to substantially correspond to the region of visual accuracy of the input image; and
(vi) controlling the image steering unit to adjust a location of the projection of the rendered focus image on the at least one projection surface, such that the projection of the rendered focus image substantially overlaps the projection of the masked region of the rendered context image and controlling the at least one first actuator to adjust the location of the projection of the rendered focus image on the at least one projection surface,
wherein the at least one context display comprises a layer having a low pixel resolution, thus having a pixel layout that allows the projection of the rendered focus image to pass through substantially, and the separation between neighboring pixels in the pixel layout constitutes semi-transparent regions therebetween, and the projection surface of the rendered focus image is on a back side of said layer, and
wherein (i), (ii) and (vi) are performed substantially simultaneously.

12. The method of claim 11, wherein the location of the projection of the rendered focus image (308A, 308B) is adjusted by controlling at least one second actuator of the image steering unit to move at least one optical element of the image steering unit with respect to the at least one focus image projector, wherein the at least one optical element is positioned on an optical path between the at least one projection surface and the at least one focus image projector.

13. The method of claim 11 or 12, wherein the location of the projection of the rendered focus image (308A, 308B) is adjusted by controlling at least one third actuator of the image steering unit (208) to move the at least one projection surface (104, 204).

14. The method of any of claims 11 to 13, further comprising adjusting a focus of the projection of the rendered focus image (308A, 308B) by controlling at least one fourth actuator of the display apparatus (100, 200, 300) to move at least one focusing lens of the display apparatus with respect to the at least one focus image projector (106, 206, 304A, 304B), wherein the at least one focusing lens is positioned on an optical path between the at least one projection surface (104, 204) and the at least one focus image projector.

## Patentansprüche

1. Anzeigevorrichtung (100, 200, 300), umfassend:
- mindestens eine Kontextanzeige (102, 202, 302) zur Wiedergabe eines Kontextbilds (306), wobei eine Winkelbreite einer Projektion des wiedergegebenen Kontextbilds im Bereich von 40 Grad bis 220 Grad liegt, wobei die mindestens eine Kontextanzeige mindestens eine Projektionsfläche umfasst;
- mindestens einen Fokusbildprojektor (106, 206, 304A, 304B) zur Wiedergabe eines Fokusbilds (308A, 308B), wobei eine Winkelbreite einer Projektion des wiedergegebenen Fokusbilds im Bereich von 5 Grad bis 60 Grad liegt;
- eine Bildsteuereinheit (208), umfassend mindestens ein erstes Stellglied zum Bewegen des Fokusbildprojektors in Bezug zu der mindestens einen Projektionsfläche (104, 204);
- Mittel zum Erkennen einer Blickrichtung (210); und
- einen Prozessor (212), der in Kommunikationsverbindung mit der Bildsteuereinheit und den Mitteln zum Erkennen der Blickrichtung steht, wobei der Prozessor dazu konfiguriert ist,
(a) ein Eingangsbild zu empfangen und die erkannte Blickrichtung zu verwenden, um einen Bereich visueller Präzision des Eingangsbilds zu bestimmen;
(b) das Eingangsbild zu verarbeiten, um das Kontextbild und das Fokusbild zu erzeugen, wobei das Kontextbild eine erste Auflösung aufweist und das Fokusbild eine zweite Auflösung aufweist, wobei:
- ein Bereich des Kontextbilds, der im Wesentlichen dem Bereich visueller Präzision des Eingangsbilds entspricht, maskiert ist,
- das Fokusbild im Wesentlichen dem Bereich visueller Präzision des Eingangsbilds entspricht und
- die zweite Auflösung höher als die erste Auflösung ist;
(c) das Kontextbild auf der mindestens einen Kontextanzeige wiederzugeben;
(d) das Fokusbild auf der mindestens einen Projektionsfläche mittels des mindestens einen Fokusbildprojektors wiederzugeben; und
(e) die Bildsteuereinheit zu bedienen, um einen Projektionsort des wiedergegebenen Fokusbilds auf der mindestens einen Projektionsfläche derart einzustellen, dass die Projektion des wiedergegebenen Fokusbilds im Wesentlichen die Projektion des maskierten Bereichs des wiedergegebenen Kontextbilds überlappt, und das mindestens eine erste Stellglied zu bedienen, um den Projektionsort des wiedergegebenen Fokusbilds auf der mindestens einen Projektionsfläche einzustellen,
wobei die mindestens eine Kontextanzeige eine Schicht umfasst, die eine niedrige Pixelauflösung und somit eine Pixelverteilung aufweist, die es ermöglicht, dass die Projektion des wiedergegebenen Fokusbilds im Wesentlichen hindurchtritt, und die Trennung zwischen benachbarten Pixeln in der Pixelverteilung halbdurchsichtige Bereiche dazwischen ausbildet und die Projektionsfläche des wiedergegebenen Fokusbilds auf einer Rückseite der Schicht liegt, und
wobei der Prozessor dazu konfiguriert ist, (c), (d) und (e) im Wesentlichen gleichzeitig auszuführen.

2. Anzeigevorrichtung (100, 200, 300) nach Anspruch 1, wobei die mindestens eine Kontextanzeige (102, 202, 302) eine mehrschichtige Struktur umfasst und wobei die mindestens eine Projektionsfläche (104, 204) mittels mindestens einer Schicht der mehrschichtigen Struktur umgesetzt ist.

3. Anzeigevorrichtung (100, 200, 300) nach Anspruch 1 oder 2, wobei die mindestens eine Projektionsfläche (104, 204) mittels einer optischen Beschichtung auf einer Vorderseite der mindestens einen Kontextanzeige (102, 202, 302) oder auf einer Rückseite der mindestens einen Kontextanzeige umgesetzt ist.

4. Anzeigevorrichtung (100, 200, 300) nach Anspruch 1, 2 oder 3, wobei die mindestens eine Projektionsfläche (104, 204) mittels eines Polarisators oder eines Retarders umgesetzt ist.

5. Anzeigevorrichtung (100, 200, 300) nach einem der vorhergehenden Ansprüche, wobei die mindestens eine Kontextanzeige (102, 202, 302) mindestens eine Schicht umfasst, die optische Wellenleiter aufweist, die es ermöglichen, dass die Projektion des wiedergegebenen Fokusbilds (308A, 308B) im Wesentlichen hindurchtritt.

6. Anzeigevorrichtung (100, 200, 300) nach einem der vorhergehenden Ansprüche, wobei die Bildsteuereinheit (208) Folgendes umfasst:
- mindestens ein optisches Element, das auf einem Lichtweg zwischen der mindestens einen Projektionsfläche (104, 204) und dem mindestens einen Fokusbildprojektor (106, 206, 304A, 304B) positioniert ist, wobei das mindestens eine optische Element aus der Gruppe ausgewählt ist, die aus einer Linse, einem Prisma, einem Spiegel und einem Strahlteiler besteht; und
- mindestens ein zweites Stellglied zum Bewegen des mindestens einen optischen Elements in Bezug zu dem mindestens einen Fokusbildprojektor,
wobei der Prozessor (212) dazu konfiguriert ist, das mindestens eine zweite Stellglied zu bedienen, um den Projektionsort des wiedergegebenen Fokusbilds (308A, 308B) auf der mindestens einen Projektionsfläche einzustellen.

7. Anzeigevorrichtung (100, 200, 300) nach einem der vorhergehenden Ansprüche, wobei die Bildsteuereinheit (208) mindestens ein drittes Stellglied zum Bewegen der mindestens einen Projektionsfläche (104, 204) umfasst, wobei der Prozessor (212) dazu konfiguriert ist, das mindestens eine dritte Stellglied zu bedienen, um den Projektionsort des wiedergegebenen Fokusbilds (308A, 308B) auf der mindestens einen Projektionsfläche einzustellen.

8. Anzeigevorrichtung (100, 200, 300) nach einem der vorhergehenden Ansprüche, wobei die Anzeigevorrichtung Folgendes umfasst:
- mindestens eine Sammellinse, die auf einem Lichtweg zwischen der mindestens einen Projektionsfläche (104, 204) und dem mindestens einen Fokusbildprojektor (106, 206, 304A, 304B) positioniert ist; und
- mindestens ein viertes Stellglied zum Bewegen der mindestens einen Sammellinse in Bezug zu dem mindestens einen Fokusbildprojektor,
wobei der Prozessor (212) dazu konfiguriert ist, das mindestens eine vierte Stellglied zu bedienen, um einen Projektionsfokus des wiedergegebenen Fokusbilds (308A, 308B) einzustellen.

9. Anzeigevorrichtung (100, 200, 300) nach einem der vorhergehenden Ansprüche, wobei die Kontextanzeige (102, 202, 302) aus der Gruppe ausgewählt ist, die aus Folgendem besteht: eine Flüssigkristallanzeige, eine Anzeige auf Basis von Leuchtdioden, eine Anzeige auf Basis von organischen Leuchtdioden, eine Anzeige auf Basis von organischen Mikroleuchtdioden und eine Anzeige auf Basis von Flüssigkristallen auf Silizium.

10. Anzeigevorrichtung (100, 200, 300) nach einem der vorhergehenden Ansprüche, wobei der Fokusbildprojektor (106, 206, 304A, 304B) aus der Gruppe ausgewählt ist, die aus Folgendem besteht: ein Projektor auf Basis einer Flüssigkristallanzeige, ein Projektor auf Basis von Leuchtdioden, ein Projektor auf Basis von organischen Leuchtdioden, ein Projektor auf Basis von Flüssigkristallen auf Silizium, ein Projektor auf Basis von digitaler Lichtverarbeitung und ein Laserprojektor.

11. Verfahren zum Anzeigen mittels einer Anzeigevorrichtung (100, 200, 300) umfassend mindestens eine Kontextanzeige (102, 202, 302), mindestens einen Fokusbildprojektor (106, 206, 304A, 304B), eine Bildsteuereinheit (208) umfassend mindestens ein erstes Stellglied zum Bewegen des Fokusbildprojektors in Bezug zu der mindestens einen Projektionsfläche (104, 204), Mittel zum Erkennen einer Blickrichtung (210) und einen Prozessor (212) in Kommunikationsverbindung mit der Bildsteuereinheit und den Mitteln zum Erkennen der Blickrichtung, wobei die mindestens eine Kontextanzeige mindestens eine Projektionsfläche umfasst, wobei das Verfahren Folgendes umfasst:
(i) Wiedergeben eines Kontextbilds (306) mittels der mindestens einen Kontextanzeige, wobei eine Winkelbreite einer Projektion des wiedergegebenen Kontextbilds im Bereich von 40 Grad bis 220 Grad liegt;
(ii) Wiedergeben eines Fokusbilds (308A, 308B) mittels des mindestens einen Fokusbildprojektors, wobei eine Winkelbreite einer Projektion des wiedergegebenen Fokusbilds im Bereich von 5 Grad bis 60 Grad liegt;
(iii) Einrichten, dass die Projektion des wiedergegebenen Fokusbilds mit der Projektion des wiedergegebenen Kontextbilds kombiniert wird, um eine visuelle Szene zu erschaffen;
(iv) Erkennen einer Blickrichtung und Verwenden der erkannten Blickrichtung, um einen Bereich visueller Präzision eines Eingangsbilds zu bestimmen;
(v) Verarbeiten des Eingangsbilds, um das Kontextbild und das Fokusbild zu erzeugen, wobei das Kontextbild eine erste Auflösung aufweist und das Fokusbild eine zweite Auflösung aufweist, wobei die zweite Auflösung höher als die erste Auflösung ist, wobei das Verarbeiten Folgendes umfasst:
- Maskieren eines Bereichs des Kontextbilds, der im Wesentlichen dem Bereich visueller Präzision des Eingangsbilds entspricht; und
- Erzeugen des Fokusbilds, sodass es im Wesentlichen dem Bereich visueller Präzision des Eingangsbilds entspricht; und
(vi) Bedienen der Bildsteuereinheit, um einen Projektionsort des wiedergegebenen Fokusbilds auf der mindestens einen Projektionsfläche derart einzustellen, dass die Projektion des wiedergegebenen Fokusbilds im Wesentlichen die Projektion des maskierten Bereichs des wiedergegebenen Kontextbilds überlappt, und Bedienen des mindestens einen ersten Stellglieds, um den Projektionsort des wiedergegebenen Fokusbilds auf der mindestens einen Projektionsfläche einzustellen,
wobei die mindestens eine Kontextanzeige eine Schicht umfasst, die eine niedrige Pixelauflösung und somit eine Pixelverteilung aufweist, die es ermöglicht, dass die Projektion des wiedergegebenen Fokusbilds im Wesentlichen hindurchtritt, und die Trennung zwischen benachbarten Pixeln in der Pixelverteilung halbdurchsichtige Bereiche dazwischen ausbildet und die Projektionsfläche des wiedergegebenen Fokusbilds auf einer Rückseite der Schicht liegt, und
wobei (i), (ii) und (vi) im Wesentlichen gleichzeitig ausgeführt werden.

12. Verfahren nach Anspruch 11, wobei der Projektionsort des wiedergegebenen Fokusbilds (308A, 308B) durch Bedienen mindestens eines zweiten Stellglieds der Bildsteuereinheit eingestellt wird, um mindestens ein optisches Element der Bildsteuereinheit in Bezug zu dem mindestens einen Fokusbildprojektor zu bewegen, wobei das mindestens eine optische Element auf einem Lichtweg zwischen der mindestens einen Projektionsfläche und dem mindestens einen Fokusbildprojektor positioniert ist.

13. Verfahren nach Anspruch 11 oder 12, wobei der Projektionsort des wiedergegebenen Fokusbilds (308A, 308B) durch Bedienen mindestens eines dritten Stellglieds der Bildsteuereinheit (208) eingestellt wird, um die mindestens eine Projektionsfläche (104, 204) zu bewegen.

14. Verfahren nach einem der Ansprüche 11 bis 13, ferner umfassend Einstellen eines Projektionsfokus des wiedergegebenen Fokusbilds (308A, 308B) durch Bedienen mindestens eines vierten Stellglieds der Anzeigevorrichtung (100, 200, 300), um mindestens eine Sammellinse der Anzeigevorrichtung in Bezug zu dem mindestens einen Fokusbildprojektor (106, 206, 304A, 304B) zu bewegen, wobei die mindestens eine Sammellinse auf einem Lichtweg zwischen der mindestens einen Projektionsfläche (104, 204) und dem mindestens einen Fokusbildprojektor positioniert ist.

## Revendications

1. Dispositif d'affichage (100, 200, 300) comprenant :
- au moins un affichage contextuel (102, 202, 302) pour restituer une image contextuelle (306), la largeur angulaire d'une projection de l'image contextuelle restituée étant comprise dans la plage de 40 degrés à 220 degrés, l'au moins un affichage contextuel comprenant au moins une surface de projection ;
- au moins un projecteur d'image de mise au point (106, 206, 304A, 304B) pour restituer une image de mise au point (308A, 308B), la largeur angulaire d'une projection de l'image de mise au point restituée étant comprise dans la plage de 5 degrés à 60 degrés ;
- une unité de guidage d'image (208) comprenant au moins un premier actionneur pour déplacer le projecteur d'image de mise au point par rapport à l'au moins une surface de projection (104, 204) ;
- un moyen de détection de la direction du regard (210) ; et
- un processeur (212) couplé en communication avec l'unité de guidage d'image et le moyen de détection de la direction du regard, le processeur étant configuré pour :
(a) recevoir une image d'entrée, et utiliser la direction du regard détectée pour déterminer une région de précision visuelle de l'image d'entrée ;
(b) traiter l'image d'entrée pour générer l'image contextuelle et l'image de mise au point, l'image contextuelle ayant une première résolution et l'image de mise au point ayant une seconde résolution, dans lequel
- une région de l'image contextuelle qui correspond sensiblement à la région de précision visuelle de l'image d'entrée est masquée,
- l'image de mise au point correspond sensiblement à la région de précision visuelle de l'image d'entrée, et
- la seconde résolution est supérieure à la première résolution ;
(c) restituer l'image contextuelle sur l'au moins un affichage contextuel ;
(d) restituer l'image de mise au point sur l'au moins une surface de projection au moyen de l'au moins un projecteur d'image de mise au point ; et
(e) commander à l'unité de guidage d'image d'ajuster la position de la projection de l'image de mise au point restituée sur l'au moins une surface de projection, de telle sorte que la projection de l'image de mise au point restituée soit sensiblement superposée à la projection de la région masquée de l'image contextuelle restituée, et commander à l'au moins un premier actionneur d'ajuster la position de la projection de l'image de mise au point restituée sur l'au moins une surface de projection,
dans lequel l'au moins un affichage contextuel comprend une couche ayant une faible résolution de pixels, en présentant ainsi une disposition des pixels qui permet un passage presque parfait de la projection de l'image de mise au point restituée, et la séparation entre des pixels voisins, dans la disposition des pixels constitue des régions semi-transparentes entre eux, et la surface de projection de l'image de mise au point restituée se trouve sur la face arrière de ladite couche, et
dans lequel le processeur est configuré pour réaliser (c), (d) et (e) d'une manière sensiblement simultanée.

2. Dispositif d'affichage (100, 200, 300) selon la revendication 1, dans lequel l'au moins un affichage contextuel (102, 202, 302) comprend une structure multicouche, et dans lequel l'au moins une surface de projection (104, 204) est réalisée au moyen d'au moins une couche de la structure multicouche.

3. Dispositif d'affichage (100, 200, 300) selon la revendication 1 ou 2, dans lequel l'au moins une surface de projection (104, 204) est réalisée au moyen d'un revêtement optique sur une face avant de l'au moins un affichage contextuel (102, 202, 302) ou sur une face arrière de l'au moins un affichage contextuel.

4. Dispositif d'affichage (100, 200, 300) selon la revendication 1, 2 ou 3, dans lequel l'au moins une surface de projection (104, 204) est réalisée au moyen d'un polariseur ou d'un retardateur.

5. Dispositif d'affichage (100, 200, 300) selon l'une quelconque des revendications précédentes, dans lequel l'au moins un affichage contextuel (102, 202, 302) comprend au moins une couche ayant des guides d'ondes optiques permettant le passage presque complet de la projection de l'image de mise au point restituée (308A, 308B).

6. Dispositif d'affichage (100, 200, 300) selon l'une quelconque des revendications précédentes, dans lequel l'unité de guidage d'image (208) comprend :
- au moins un élément optique qui est positionné sur un trajet optique entre l'au moins une surface de projection (104, 204) et l'au moins un projecteur d'image de mise au point (106, 206, 304A, 304B), l'au moins un élément optique étant choisi dans le groupe consistant en une lentille, un prisme, un miroir et un diviseur de faisceau ; et
- au moins un deuxième actionneur pour déplacer l'au moins un élément optique par rapport à l'au moins un projecteur d'image de mise au point,
dans lequel le processeur (212) est configuré pour commander à l'au moins un deuxième actionneur d'ajuster la position de la projection de l'image de mise au point restituée (308A, 308B) sur l'au moins une surface de projection.

7. Dispositif d'affichage (100, 200, 300) selon l'une quelconque des revendications précédentes, dans lequel l'unité de guidage d'image (208) comprend au moins un troisième actionneur pour déplacer l'au moins une surface de projection (104, 204), le processeur (212) étant configuré pour commander à l'au moins un troisième actionneur d'ajuster la position de la projection de l'image de mise au point restituée (308A, 308B) sur l'au moins une surface de projection.

8. Dispositif d'affichage (100, 200, 300) selon l'une quelconque des revendications précédentes, le dispositif d'affichage comprenant :
- au moins une lentille de mise au point qui est positionnée sur un trajet optique entre l'au moins une surface de projection (104, 204) et l'au moins un projecteur d'image de mise au point (106, 206, 304A, 304B) ; et
- au moins un quatrième actionneur pour déplacer l'au moins une lentille de mise au point par rapport à l'au moins un projecteur d'image de mise au point,
dans lequel le processeur (212) est configuré pour commander à l'au moins un quatrième actionneur d'ajuster la mise au point de la projection de l'image de mise au point restituée (308A, 308B).

9. Dispositif d'affichage (100, 200, 300) selon l'une quelconque des revendications précédentes, dans lequel l'affichage contextuel (102, 202, 302) est choisi dans le groupe consistant en un écran à cristaux liquides, un écran à diodes électroluminescentes, un écran à diodes électroluminescentes organiques, un écran à diodes électroluminescentes microorganiques, et un écran à cristaux liquides sur silicium.

10. Dispositif d'affichage (100, 200, 300) selon l'une quelconque des revendications précédentes, dans lequel le projecteur d'image de mise au point (106, 206, 304A, 304B) est choisi dans le groupe consistant en un projecteur à cristaux liquides, un projecteur à diodes électroluminescentes, un projecteur à diodes électroluminescentes organiques, un projecteur à cristaux liquides sur silicium, un projecteur à traitement numérique de la lumière, et un projecteur laser.

11. Procédé d'affichage, au moyen d'un dispositif d'affichage (100, 200, 300) comprenant au moins un affichage contextuel (102, 202, 302), au moins un projecteur d'image de mise au point (106, 206, 304A, 304B), une unité de guidage d'image (208) comprenant au moins un premier actionneur pour déplacer le projecteur d'image de mise au point par rapport à l'au moins une surface de projection (104, 204), un moyen de détection de la direction du regard (210) et un processeur (212) couplé en communication avec l'unité de guidage d'image et le moyen de détection de la direction du regard, l'au moins un affichage contextuel comprenant au moins une surface de projection, le procédé comprenant :
(i) la restitution d'une image contextuelle (306) par l'intermédiaire de l'au moins un affichage contextuel, la largeur angulaire d'une projection de l'image contextuelle restituée étant comprise dans la plage de 40 degrés à 220 degrés ;
(ii) la restitution d'une image de mise au point (308A, 308B) par l'intermédiaire de l'au moins un projecteur d'image de mise au point, la largeur angulaire d'une projection de l'image de mise au point restituée étant comprise dans la plage de 5 degrés à 60 degrés ;
(iii) l'agencement de la projection de l'image de mise au point restituée, pour combinaison avec la projection de l'image contextuelle restituée, pour créer une scène visuelle ;
(iv) la détection de la direction du regard et l'utilisation de la direction du regard détectée pour déterminer une région de précision visuelle d'une image d'entrée ;
(v) le traitement de l'image d'entrée pour générer l'image contextuelle et l'image de mise au point, l'image contextuelle ayant une première résolution et l'image de mise au point ayant une seconde résolution, la seconde résolution étant supérieure à la première résolution, le traitement comprenant :
- le masquage d'une région de l'image contextuelle qui correspond sensiblement à la région de précision visuelle de l'image d'entrée ; et
- la génération de l'image de mise au point de façon qu'elle corresponde sensiblement à la région de précision visuelle de l'image d'entrée ; et
(vi) la commande, à l'unité de guidage d'image, d'ajuster la position de la projection de l'image de mise au point restituée sur l'au moins une surface de projection, de telle sorte que la projection de l'image de mise au point restituée doit sensiblement superposée à la région masquée de l'image contextuelle restituée, et la commande, à l'au moins un premier actionneur, d'ajuster la position de la projection de l'image de mise au point restituée sur l'au moins une surface de projection ;
dans lequel l'au moins un affichage contextuel comprend une couche ayant une faible résolution de pixels, ayant ainsi une disposition des pixels qui permet le passage presque parfait de la projection de l'image de mise au point restituée, et la séparation entre des pixels voisins, dans la disposition des pixels, constitue des régions semi-transparentes entre eux, et la surface de projection de l'image de mise au point restituée se trouve sur la face arrière de ladite couche, et
dans lequel (i), (ii) et (vi) sont réalisés d'une manière sensiblement simultanée.

12. Procédé selon la revendication 11, dans lequel la position de la projection de l'image de mise au point restituée (308A, 308B) est ajustée par la commande, à l'au moins un deuxième actionneur de l'unité de guidage d'image, de déplacer au moins un élément optique de l'unité de guidage d'image par rapport à l'au moins un projecteur d'image de mise au point, l'au moins un élément optique étant positionné sur un trajet optique entre l'au moins une surface de projection et l'au moins un projecteur d'image de mise au point.

13. Procédé selon la revendication 11 ou 12, dans lequel la position de la projection de l'image de mise au point restituée (308A, 308B) est ajustée par commande, à l'au moins un troisième actionneur de l'unité de guidage d'image (208), de déplacer l'au moins une surface de projection (104, 204).

14. Procédé selon l'une quelconque des revendications 11 à 13, comprenant en outre l'ajustement de la mise au point de la projection de l'image de mise au point restituée (308A, 308B) par commande, à l'au moins un quatrième actionneur du dispositif d'affichage (100, 200, 300), de déplacer au moins une lentille de mise au point du dispositif d'affichage par rapport à l'au moins un projecteur d'image de mise au point (106, 206, 304A, 304B), l'au moins une lentille de mise au point étant positionnée sur un trajet optique entre l'au moins une surface de projection (104, 204) et l'au moins un projecteur d'image de mise au point.
